# EUROPÄISCHE PATENTANMELDUNG

(11) **EP 1 832 469 A2**
(43) Veröffentlichungstag der Anmeldung: **12.09.2007**
(21) Anmeldenummer: 07004559.6
(22) Anmeldetag: 06.03.2007
(51) Int. Cl.: B60N 2/58, B60N 3/00

(54) **Rahmen zum Abstützen einer Abdeckung an einem Fahrzeugsitz und Fahrzeugsitz mit einer solchen Abdeckung**

(30) Priorität: 09.03.2006 DE 102006011364
(71) Anmelder: Huperz Automotive Systems GmbH & Co KG, 57439 Attendorn (DE)
(72) Erfinder: Huperz, Ulrich, 57439 Attendorn (DE)
(74) Vertreter: Wenzel & Kalkoff

(57) **Zusammenfassung**

Die Erfindung betrifft einen Rahmen zum Abstützen einer Abdeckung an einem Fahrzeugsitz mit
- einem Rahmen aus Draht oder Rohr und mit
- Trägerelementen zum Abstützen der Abdeckung,

dadurch gekennzeichnet, dass
die Trägerelemente aus Kunststoff sind.

Die Erfindung betrifft weiter ein Verfahren zur Herstellung eines Rahmens zum Abstützen einer Abdeckung an einem Fahrzeugsitz mit den Schritten
- Formen eines Rahmens aus rohrförmigen Abschnitten zu einer vorgegebenen Kontur
- Einführen des Rahmens in eine Spritzguss-Anlage
- Anformen von Trägerelementen aus Kunststoff mittels Spritzgießen.

## Beschreibung

Die Erfindung betrifft einen Rahmen zum Abstützen einer Abdeckung an einem Fahrzeugsitz und einen Fahrzeugsitz mit einer solchen Abdeckung.

Die DE 25 36 209 beschreibt ein klappbares Tablett an Rückenlehnen von Kraftfahrzeugen. Auf einen Metallrahmen wird ein Kunststoff-Tablett mit Rasthilfen aufgerastet. Es handelt sich um eine verhältnismäßig einfache, rechteckige Konstruktion, die sich nicht auf unregelmäßig geformte Strukturen übertragen lässt.

Fahrzeugsitze bestehen aus der eigentlichen Sitzfläche und einer Lehne. Die Sitzfläche ist über einer Unterkonstruktion angeordnet. Die tlnterkonstruktion umfasst die Befestigung des Sitzes, Rahmenteile und ggf. Teile der Federung. Zum Einstellen des Sitzes sind an zahlreichen Fahrzeugsitzen mechanische und/oder elektrische Bedienelemente angeordnet. Zum Abdecken der Unterkonstruktion und ggf. zum Aufnehmen der Bedienelemente sind Abdeckelemente bekannt. Derartige Abdeckungen werden beispielsweise vielfach in Fahrzeugen eingesetzt und weisen Abmessungen von bis zu 30 cm x 80 cm auf, sind meist aber kleiner, etwa 10 cm x 50 cm.

Diese Abdeckelemente an Fahrzeugsitzen bestehen in der Regel aus einem Rahmen, der aus Draht oder Rohr, also aus Metall gefertigt ist. Auf diesem Rahmen ist eine Ahdekkung angebracht. Die Abdeckung besteht in der Regel aus Kunststoff. Rahmen und Abdeckung sind über Trägerelemente miteinander verbunden. Diese Trägerelemente sind aus Metall, in der Regel werden Blechabschnitte oder -ösen eingesetzt. Diese Trägerelemente aus Metall werden an den Rahmen angeschweißt, damit die Abdeckung in definierter Weise abgestützt wird. Zum einen ist Metall als Werkstoff für diese Anwendung teuer. Zum anderen ist das Schweißen aufwändig und ebenfalls kostenintensiv.

Der Erfindung liegt daher die Aufgabe zugrunde, einen einfachen und preiswerten Rahmen zum Abstützen von Abdeckungen für Fahrzeugsitze zur Verfügung zu stellen.

Diese Aufgabe wird gelöst mit einem Rahmen zum Abstützen einer Abdeckung an einem Fahrzeugsitz mit Abschnitten aus Draht und / oder Rohr und mit Trägerelementen zum Abstützen der Abdeckung, wobei die Trägerelemente aus Kunststoff sind. Draht oder Rohr sind meist aus Metall gefertigt, um die Kräfte aufnehmen zu können, die auf die Abdeckung einwirken.

Es hat sich herausgestellt, dass einfache Kunststoff-Elemente zum Tragen und Abstützen der Abdeckung vollständig ausreichend sind. Die auf den Rahmen und die Trägerelemente einwirkenden Kräfte können gut von Kunststoff-Elementen aufgenommen werden.

Entscheidend für die Eignung von Kunststoff als Trägerelement ist aber auch eine gute Anbindung an den Rahmen. Hier sind vielfältige Lösungen denkbar. Besonders bevorzugt wird es, wenn die Kunststoff-Trägerelemente unmittelbar nach dem Formen des Rahmens an diesen Rahmen angespritzt werden.

Diese auf den ersten Blick als aufwändig erscheinende Lösung ist in der Tat jedoch einfach und kostengünstig. Die Rahmen bzw. die gesamten Abdeckungen werden in großen Serien hergestellt. Pro Rahmen sind meist mehrere Trägerelemente erforderlich. Die großen Stückzahlen machen das Herstellen von entsprechenden Spritzguss-Formen wirtschaftlich, zumal nur kleine Elemente herzustellen sind. Das unmittelbare Anformen an den Rahmen ermöglicht den Verzicht auf das Hantieren mit vielen Kleinteilen und eine schnelle, sichere und definierte Produktion.

Alternativ, z. B. dann, wenn die Serien-Stückzahlen die Kosten für Spritzguss-Formen nicht rechtfertigen, können die Trägerelemente jedoch auch anderweitig am Rahmen fixiert werden. Sie können beispielsweise angeklebt oder mechanisch durch Klemmen oder Rasten am Rahmen angebracht werden.

Die erfindungsgemäße Lösung umfasst auch ein Verfahren mit den Schritten des Formens des Rahmens aus rohrförmigen Abschnitten zu einer vorgegebenen Kontur, des Einführens des Rahmens in eine Spritzguss-Anlage und des Anformens von Trägerelementen aus Kunststoff mittels Spritzgießen.

Der Begriff "rohrförmig" wird im Sinne dieser Anmeldung verwendet, um anzudeuten, dass langgestreckte Bauteile wie Draht oder Rohr verwendet werden, um den Rahmen zu formen. Der Rahmen bildet -wie erwähnt- meist die Kontur der Abdeckung nach und weist ggf. zusätzliche Stützstreben auf. Er wird aus Draht oder aus Röhrchen hergestellt, wobei entweder ein einziger Drahtabschnitt genügt, um die Kontur zu formen oder es werden mehrere Abschnitte aneinander gefügt, um die gewünschte Kontur herzustellen. Je nach Form der Abdeckung kann auch darauf verzichtet werden, die Kontur der Abdeckung selbst unmittelbar nachzubilden, insbesondere dann, wenn statische Überlegungen zeigen, dass eine abweichende Gestaltung des Rahmens zweckmäßig ist. Es ist nicht erforderlich, dass der Rahmen geschlossen ist. Weiter kann der Rahmen zusätzliche Abschnitte aufweisen, die z. B. zum Abstützen oder Anbinden der Abdekkung an andere Bauteile (Rahmen, Autositz etc) dienen.

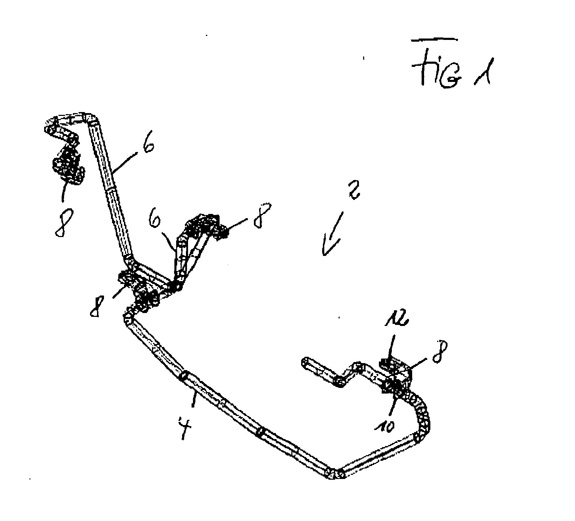

Eine vorteilhafte Ausführungsform der Erfindung wird am Beispiel der Fig. 1 näher erläutert. Es zeigt:

Fig. 1 eine schematische, perspektivische Darstellung eines erfindungsgemäßen Rahmens mit Trägerelementen.

Der Rahmen 2 ist zusammengesetzt aus rohrförmigen Abschnitten 4 aus Draht, die zu einer dreidimensionalen Struktur geformt sind. An die rohrförmigen Abschnitte 4 sind Stützen 6 angeformt, die zum Fixieren des Rahmens 2 und der darauf anzubringenden, hier nicht dargestellten Abdeckung dienen. Die Stützen 6 sind aus dem gleichen Werkstoff wie die rohrförmigen Abschnitte 4.

An die rohrförmigen Abschnitte 4 und die Stützen 6 sind Trägerelemente 8 aus Kunststoff angeformt, Die Trägerelemente 8 können weitgehend frei gestaltet werden. Sie sind so geformt, dass sie der Abdeckung möglichst einfach und effektiv Halt bieten und ggf. eine einfache Befestigung des Rahmens 2 an weiteren Bauteilen (Rahmen eines Kfz, Autositz) ermöglichen.

Fig. 1 zeigt, dass die Trägerelemente 8 einen ersten Abschnitt 10 aufweisen, mit dem sie unmittelbar beim Anspritzen an den rohrförmigen Abschnitt 4 bzw. an die Stützen 6 angeformt werden. Der Abschnitt 10 kann den rohrförmigen Abschnitt 4 oder die Stützen 6 vollständig umschließen oder -wie in Fig. i gezeigt- nur teilweise umgreifen.

Weiter weisen die Trägerelemente 8 einen zweiten Abschnitt 12 auf, der zum Anbringen und Abstützen der Abdeckung ausgelegt ist, beispielsweise eine Auflagefläche für die abzustützende Abdeckung aufweist. Alternativ kann der zweite Abschnitt 12 zum Befestigen des Rahmens an weiteren Bauteilen ausgelegt sein, z. B. Ausnehmungen für Befestigungsschrauben oder -nieten aufweisen.

## Patentansprüche

1. Rahmen zum Abstützen einer Abdeckung an einem Fahrzeugsitz, wobei der Rahmen aus Draht oder Rohr hergestellt ist und Trägerelemente zum Abstützen der Abdeckung aufweist, **dadurch gekennzeichnet, dass** die Trägerelemente aus Kunststoff sind.

2. Rahmen nach Anspruch i, **dadurch gekennzeichnet, dass** die Trägerelemente aus Kunststoff unmittelbar an den Draht oder das Rohr des Rahmens angespritzt sind.

3. Rahmen nach Anspruch 1, **dadurch gekennzeichnet, dass** die Trägerelemente durch Klemmen, Rasten und/ oder Kleben mit dem Draht oder dem Rohr des Rahmens verbunden sind.

4. Rahmen nach Anspruch 1, **dadurch gekennzeichnet, dass** die Trägerelemente mehrteilig sind.

5. Rahmen nach Anspruch i, **dadurch gekennzeichnet, dass** die Trägerelemente Aufnahmen für die Abdeckung aufweisen.

6. Rahmen nach Anspruch 1, **dadurch gekennzeichnet, dass** die Trägerelemente Aufnahmen zur Befestigung des Fahrzeugsitzes aufweisen.

7. Verfahren zum Herstellen eines Rahmens zum Abstützen einer Abdeckung an einem Fahrzeugsitz mit den Schritten
- Formen eines Rahmens aus Rohr oder Draht zu einer vorgegebenen Kontur
- Einführen des Rahmens in eine Spritzguss-Anlagc
- Anformen von Trägerelementen aus Kunststoff mittels Spritzgießen.

8. Verfahren nach Anspruch 7, **dadurch gekennzeichnet, dass** der Rahmen durch Klemmen oder Rasten an einem Fahrzeugsitz befestigt wird.

9. Fahrzeugsitz mit einer Abdeckung, die einen Rahmen nach einem der Ansprüche 1 bis 6 aufweist.
